# EUROPEAN PATENT APPLICATION

(11) **EP 1 180 707 A2**
(43) Date of publication of application: **20.02.2002**
(21) Application number: 01118333.2
(22) Date of filing: 27.07.2001
(51) Int. Cl.: G02B 6/44

(54) **Optical fibre housing**

(30) Priority: 17.08.2000 GB 0020119
(71) Applicant: Tyco Electronics Raychem NV, 3010 Kessel-lo (BE)
(72) Inventor: Bellekens, Kathleen, 3020 Winksele-Delle (BE); Radelet, Christiaan, 3270 Scherpenheuvel (BE); Wittmeier, David, 1150 Brussels (BE)
(74) Representative: Beitsma, Gerhard Romano

(57) **Abstract**

A housing (1) for retaining a length of optical fibre (30) comprises two generally planar housing parts (2, 3) between which fibre guide means extend. The fibre guide means include a single fixed guide unit (4) defining an outer surface having a minimum radius at least equal to the minimum bend radius of the optical fibre (30) and a removable auxiliary guide unit (5) spaced apart from the fixed guide unit (4) so as to define a first, larger fibre trajectory when the auxiliary guide unit (5) is present and a second, substantially smaller fibre trajectory when the auxiliary guide unit (5) is removed. The fibre guide means may further include corresponding peripheral rims (11, 12) having undulating surfaces so as to define an uneven junction line between the housing parts.

## Description

The present invention relates to a housing for optical fibres. More in particular, the present invention relates to a housing in which a spare length of optical fibre may be stored for later use.

When managing optical fibre systems it is often necessary to store spare lengths of fibre. To allow for later adjustments such as rearranging connections and making new splices some slack is normally provided and this slack has to be stored in an organised fashion. To this end it is known to use fibre storage trays or fibre organisers containing drums around which the excess length can be wound. Examples of such structures are disclosed in International Patent Applications WO 98/48308 (Raychem) and WO 99/47960 (Raychem). A higher degree of organisation can be achieved by providing individual housings or "cassettes" for each length of fibre, as described in International Patent Application WO 00/52509 (Raychem). Such housings can be neatly stacked, as described in European Patent Application EP 1 109 044 (Tyco Electronics Raychem).

The housings described in International Patent Application WO 00/52509 are provided with several bosses or "islands" which define fibre trajectories; the fibres can be wound around these islands in several patterns. An opening is provided for the temporary insertion of an object, such as a pencil or even a finger, to temporarily define a slightly enlarged trajectory. The additional slack provided by removing said object when the length of fibre is fully accommodated in the housing is used to readjust the position of a connector at an end of the fibre so as to allow the connector to be inserted into the housing through an aperture provided for that purpose. However, if at some later stage it becomes necessary to remove some of the length of fibre stored in the housing, it is necessary to open the housing or, in the case of a housing having flexible rims, to unwind and pull out the fibre loops.

United States Patent US 5,285,515 (Mars Actel) discloses a cassette which may alternatively be used for storing or splicing optical fibres. To store optical fibre slack a single boss or "cylinder" is provided which can be removed if the cassette is to be used for splicing. To remove the single boss or to release any length of fibre, the lid of the cassette has to be taken off.

It is an object of the present invention to provide a housing for storing fibre lengths which allows an easy removal of at least part of the stored fibre.

It is another object of the present invention to provide a housing for storing fibre lengths which is economical.

It is a further object of the present invention to provide a housing which prevents the fibre from getting stuck between joints of the housing.

It is a still further object to provide a method of storing fibre lengths.

To meet these and other objects, the present invention provides a housing for retaining a length of optical fibre, comprising two generally planar housing parts between which fibre guide means extend, the fibre guide means comprising a single fixed guide unit defining an outer surface having a minimum radius at least equal to the minimum bend radius of the optical fibre and a removable auxiliary guide unit spaced apart from the fixed guide unit so as to define a first, longer fibre trajectory when the auxiliary guide unit is present and a second, substantially shorter fibre trajectory when the auxiliary guide unit is removed.

By providing two trajectories having substantially different lengths, it is possible to later reduce the stored length and use the resulting slack length, leaving the remaining length in the housing. Advantageously, the second fibre trajectory is at least 30% shorter than the first fibre trajectory, preferably at least 50%.

In an advantageous embodiment, the auxiliary guide unit is constituted by at least one collapsible boss protruding from one of the housing parts. Alternatively, the auxiliary guide unit is constituted by a hole in which an external object can be inserted, or by a removable body that originally is part of the housing. In such embodiments the auxiliary guide unit is removable in use to release stored fibre.

Preferably, the fixed guide unit is constituted by at least one boss projecting from one of the housing parts. In a particularly advantageous embodiment, the boss projecting from one housing part extends into an aperture or recess in the opposite housing part. Such a structure prevents the fibres getting caught in the junction between the housing parts. To obtain the same effect with respect to other fibre guide elements, the housing of the present invention, or any other housing having two housing parts between which fibre guide means may be accommodated, is preferably constituted such that the two housing parts have respective rims extending towards one another, the rims having corresponding undulating surfaces so as to define an uneven junction line. The rims are preferably substantially flexible but may also be rigid.

The present invention further provides a kit-of-parts for forming a housing as defined above.

The present invention additionally provides a method of storing a length of optical fibre in a housing as defined above, comprising the steps of inserting the optical fibre in the housing, winding the optical fibre around both the fixed guide unit and the auxiliary guide unit and, when the length of stored optical fibre needs to be reduced, removing the auxiliary guide unit and pulling out of at least part of the resulting slack length.

The invention will further be explained below while referring to the accompanying drawings in which:
Figure 1 shows, in perspective, view a housing according to the present invention;
Figure 2 shows, in plan view, the housing of Fig. 1;
Figure 3 shows a cross-section of the housing of Fig. 2;
Figure 4 shows, in enlarged view, part of the cross-section of Fig. 3.

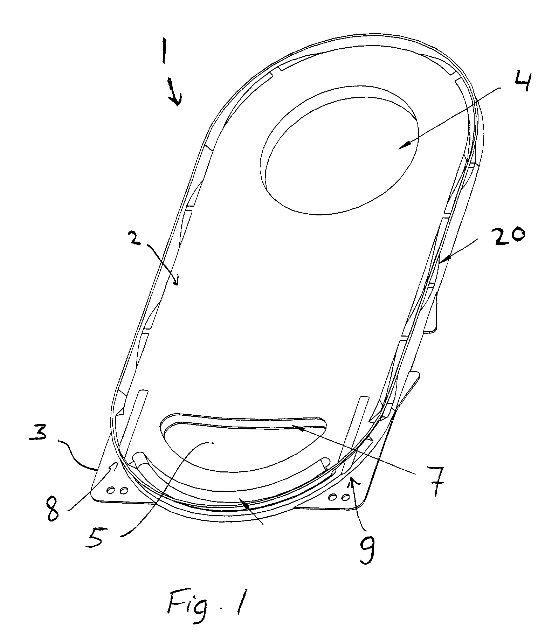

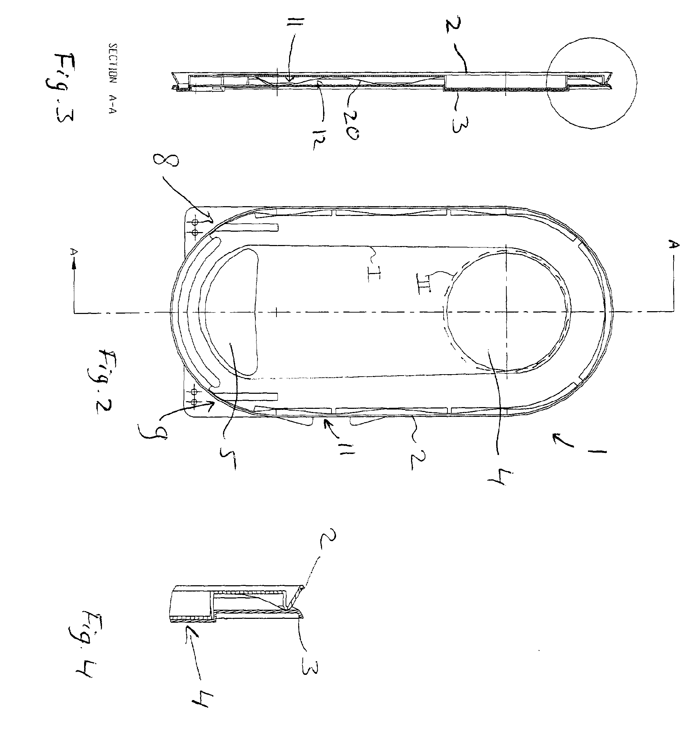

The housing 1 shown merely by way of non-limiting example in Fig. 1 consists of two generally planar housing parts, a first (upper) housing part 2 and a second (lower) housing part 3 (see also Fig. 3). As will further be explained with reference to Fig. 2, the housing parts 2 and 3 together define a fibre storage area enclosed by a rim. In this fibre storage area, a first island 4 and a second island 5 are provided, around which fibres can be wound. The first island 4 and part of the second island 5 have a radius of curvature which is at least equal to the minimum bend radius of the optical fibres. As those skilled in the art will appreciate the minimum bend radius depends on the particular type of fibre but may equal, for example, 30 mm and will in general lie between 10 and 50 mm.

The first island 4 is constituted by a boss protruding from the plane of the first housing part 4, as shown in Fig. 3. The island 4 is therefore fixed. The second island 5 however is removable or collapsible. In the latter case, the wall 7 of the island 5 may fold.

Alternatively, the second island 5 can be replaced by a through-hole in which a removable object may be inserted. The removable object may be external, e.g. a pencil or finger inserted in the through-hole, or internal e.g. a removable body (pin).

Optical fibres can enter and/or exit the housing 1 via ports 8 and 9.

As shown in Fig. 2, a first fibre trajectory I is a loop which includes both islands 4 and 5. A second fibre trajectory II only includes the first island 4 and is markedly shorter, in the example shown only about 20% of the length of the first trajectory I. Of course, the relative lengths of the trajectories depend on the particular dimensions and configuration of the housing.

A length of optical fibre may initially be introduced into the housing 1 by pulling the housing parts 2, 3 apart or by flexing the rims 11, 12. The fibre is wound around both the main island 4 and the auxiliary island 5, entering the housing via the first port 8 and exiting via the second port 9. Later, when part of the stored length is needed, the auxiliary island 5 is removed. When the fibre protruding from port 9 is pulled, the trajectory of the stored fibre will be changed from I to II, thus considerably shortening the stored fibre length without opening the housing.

As shown in Fig. 3, the peripheral rims 11, 12 of the housing parts 2 and 3 respectively have an undulating surface: the rim surface slopes up and down in an alternating fashion. In this way, an uneven (that is, undulating) junction line 20 between the housing parts 2 and 3 is obtained. The unevenness of the junction line 20 prevents fibres from being trapped between the rim surfaces. The boss protruding the plane of the opposite housing part, shown in Fig. 4, serves the same purpose. As can be seen, the housing part 3 has a recess to accommodate part of the boss of housing part 2.

It is noted that the uneven junction line of Fig. 3 and the protruding structure of Fig. 4 may also be used in optical fibre housings which are not provided with a removable island, that is, in optical fibre housings which may have one, two, three or more fixed islands or fibre guide units.

The housing parts 2 and 3 are preferably made of a flexible plastics material. However, a more rigid material could also be used. The housing parts may be permanently secured together (for example by welding or gluing) but are preferably connected by a releasable snap-fit engagement.

It will be understood by those skilled in the art that the present invention is not limited to the embodiments shown and that many additions and modifications are possible without departing from the scope of the present invention as defined in the appending claims

## Claims

1. Housing (1) for retaining a length of optical fibre (30), comprising two generally planar housing parts (2, 3) between which fibre guide means extend, the fibre guide means comprising a single fixed guide unit (4) defining an outer surface having a minimum radius at least equal to the minimum bend radius of the optical fibre (30) and a removable auxiliary guide unit (5) spaced apart from the fixed guide unit (4) so as to define a first, longer fibre trajectory when the auxiliary guide unit (5) is present and a second, substantially shorter fibre trajectory when the auxiliary guide unit (5) is removed.

2. Housing according to claim 1, wherein the second fibre trajectory is at least 30% shorter than the first fibre trajectory, preferably at least 50%.

3. Housing according to claims 1 or 2, wherein the auxiliary guide unit (5) is constituted by at least one collapsible boss protruding from one of the housing parts (2, 3).

4. Housing according to claim 1 or 2, wherein the auxiliary guide unit (5) is constituted by a hole in which an external object (35) can be inserted.

5. Housing according to claim 1 or 2, wherein the auxiliary guide unit (5) is constituted by a removable body.

6. Housing according to any of the preceding claims, wherein the fixed guide unit (4) is constituted by at least one boss projecting from one of the housing parts (2, 3).

7. Housing according to claim 6, wherein the boss projecting from one housing part extends into an aperture or recess (6) in the opposite housing part.

8. Housing according to any of the preceding claims, wherein the two housing parts (2, 3) have respective rims (11, 12) extending towards one another, the rims (11, 12) having corresponding undulating surfaces so as to define an uneven junction line (20).

9. Housing according to any of the preceding claims, wherein the auxiliary guide unit (5) is fixed rather than removable.

10. Housing (1) for retaining a length of optical fibre (30), comprising two generally planar housing parts (2, 3) between which fibre guide means extend, wherein the two housing parts (2, 3) have respective rims (11, 12) extending towards one another, the rims (11, 12) having corresponding undulating surfaces so as to define an uneven junction line (20).

11. Kit-of-parts for forming a housing (1) according to any of the preceding claims.

12. Method of storing a length of optical fibre (30) in a housing according to any of claims 1-8, comprising the steps of inserting the optical fibre (30) in the housing (1), winding the optical fibre (30) around both the fixed guide unit (4) and the auxiliary guide unit (5) and, when the length of stored optical fibre (30) needs to be reduced, removing the auxiliary guide unit (5) and pulling out of at least part of the resulting slack length.
